# EUROPEAN PATENT APPLICATION

(11) **EP 4 775 351 A1**
(43) Date of publication of application: **15.07.2026**
(21) Application number: 26150887.3
(22) Date of filing: 08.01.2026
(51) Int. Cl.: B25B 5/00

(54) **MODULAR POSITIONING SYSTEM OF TOOLS OR THE LIKE, CLAMPING TOOL ASSEMBLY INCLUDING SAME AND WORKING STRUCTURE INCORPORATING SAME**

(30) Priority: 09.01.2025 ES 202530011
(71) Applicant: Misati, S.L., 08960 San Just Desvern Barcelona (ES)
(72) Inventor: SARABIA TRILLA, Miquel, SANT JUST DESVERN (ES)
(74) Representative: Ponti & Partners, S.L.P

(57) **Abstract**

The present invention relates to a modular positioning system for tools or the like, which allows the fixing, positioning and orientation in space of said tools or the like to ensure their correct location and orientation in the performance of their function. This modular system comprises positioning parts with at least two degrees of freedom of adjustment of the position of the tool, and it can also comprise one or more auxiliary connection parts to the reference structure, allowing up to six degrees of freedom of adjustment and thus achieving the application of tightening forces perpendicular to parts to be clamped. All this creating a flexible, modular, self-assembling and recoverable system, without the need for the specific creation of elements that, outside the specific application, have no way of being reused.

## Description

The present invention relates to a modular positioning system for tools or the like, which allows the fixing, positioning and orientation in space of said tools or the like to ensure their correct location and orientation in the performance of their function.

The invention also relates to a clamping tool assembly, which incorporates such modular positioning systems and the tools themselves such as pneumatic fastening clamps.

Finally, the invention also relates to bench-type working structures or the like including clamping and/or centring tool assemblies such as the above.

### Background of the invention

Different types of structures adapted for positioning a tool or the like at a particular point and orientation, determined by its function, are known in the state of the art.

Conventional clamping parts, such as fastening clamps or the like, which are fixed to an element to clamp it, are known. In the clamping of elements with functions that do not need to be exact and that do not affect their variation, these clamps are attached to walls or conventional support structures.

At the moment in which, due to the function that the tool that is clamped must fulfil its position must be specific and stable with minimal variations in its location and orientation, these reference and fixing structures must be adapted and devised specifically for the use and final position that is required.

This is the specific case of the work benches known in the state of the art, which have tools for clamping the parts to be worked on said bench. The parts to be worked must be clamped to said bench in a specific position, so that the equipment that acts automatically or the actions that need to always be referenced on the same position of the part and in the same way for each part that has to be worked, have the same position and an identical action is carried out on each of the parts that are clamped to the bench.

As an example of this state of the art, the known benches that use fastening clamps of pneumatic type in order to be able to position each fastening clamp on the bench in its specific position in the space for each of the clamping points that are determined, tool assemblies have to be manufactured with specific and unique support feet to achieve the specific position of the fastening clamp and that it is attached to the work bench safely. This configuration and manufacture of specific support feet, by way of reference structures, makes the production of this type of work structures more expensive, in addition to having higher processing times and not being able to reuse most of said support feet for configuration projects of other benches for other parts to be worked with different geometries and/or work positions.

These known tool assemblies, formed by the support foot especially designed for the final application to which it is intended and whereto the clamping or centring tool is attached, in their final assembly state have a fixed configuration that does not allow the modification in the position and/or orientation of the clamping tool, that is, of the flange or fastening clamp that grips the workpiece. Any adjustment that has to be made goes through the modification by machining of the support foot or the use of gauges or similar solutions.

In addition, in known clamping tool assemblies, these support feet are configured so that the clamping tool press acts on the reaction support located directly on the fixed support foot, which generates stresses in the fixing foot that could cause the breakage or deformation of said fixing feet when closing the stress circuit suffered by the clamping tool assembly.

When the grip points on the workpiece coincide with an inclined, different from that perpendicular to the tightening direction, it is necessary to add specific parts that allow the force of the clamping tool to be transferred to the specific orientation of the tightening surface, which makes it necessary to invest in a new specific part to prevent a non-perpendicular force from deforming the workpiece due to the torsional torque that would occur.

In this way, it is necessary to obtain a tool positioning system that minimises the use of elements specifically designed and manufactured for each specific application and project, which allows a modular design adaptable to different designs, the elements that make up the system being recoverable, expandable, modifiable and reusable in their practical totality or large majority, allowing a contained cost in its production and allowing self-assembly, thus achieving a minimisation of costs and effective times of its final execution in clamping tool assemblies that are incorporated into work structures.

### Description of the invention

The aim of the present invention is to provide a modular tool positioning system, as well as a clamping tool assembly that incorporates said modular systems and to provide a working structure with said systems and tool assemblies, which have the advantages that will be described below.

In accordance with this objective, according to a first aspect, the present invention provides a modular tool positioning system, which comprises one or more positioning parts, wherein these positioning parts are configured at least to fix, position and/or orientate a tool or implement, such as a clamping and/or centring tool, in space.

Advantageously, the invention is based on the fact that the one or more positioning parts form a modular system configured for the positioning of a tool, wherein at least one positioning part comprises:
- a receiving means of an arm, shaft, handle or the like of the tool;
- adjustable closing means of these receiving means configured to fix in one position, as well as to release the fixing in one position and allow the movement of the arm, shaft, handle or the like of the tool, to again perform the fixing in a final desired position; and
- fixing means configured to fix the positioning part to a reference structure directly or indirectly;

It is also characteristic of the invention that the receiving means of the positioning part is configured such that it allows the variation of the position and orientation of the tool once fixed to the reference structure, by at least a longitudinal displacement of the arm, shaft, handle or the like of the tool, along a receiving axis, as well as by a rotational displacement of the arm, shaft, handle of the tool, on the receiving axis.

This configuration allows having a modular and flexible system that configures the positioning of a tool, without the need for the creation of specially designed elements that, outside the specific application for which they are designed, have no way of being reused.

This configuration also allows obtaining the necessary degrees of freedom in its adjustment to facilitate a design of the tool in a simple way by the user from these standardised, scalable and recoverable parts, from obtaining two degrees of freedom in its simplest previous embodiment, to having six degrees of freedom in more demanding configurations.

According to a preferred embodiment, the fixing means of the positioning part is configured to couple this positioning part indirectly to the reference structure through one or more connection elements fixed to a first auxiliary part.

This first auxiliary part, interposed between the positioning part and the reference structure, comprises at least means for receiving said connection elements, adjustable means for closing these receiving means for gripping and adjusting the position of the connection elements and means for fixing the first auxiliary part to the reference structure directly. The concept of directly fixing is to be understood by fixing the first auxiliary part to the reference structure without other position adjustment parts that have, on the one hand, fixing elements to the structure and that, on the other hand, independently, have means to adjust the distance and orientation on said first auxiliary part with respect to the reference structure.

The receiving means of said first auxiliary part is configured to, on the one hand, fix the position of the connection element between the positioning part and the first auxiliary part, as well as being configured to adjust, at least, the distance between the two, forming the modular positioning system.

Additionally, the adjustment of the position of the connection element with respect to the positioning part and/or the first auxiliary part, when only a single connection element is interposed between them, allows the adjustment of its rotation with respect to the axis of said connection element, achieving a specific orientation of the positioning part, in addition to the adjustment of the distance between both parts indicated above, all thanks to the adjustable closing means of these receiving means of the first auxiliary part and the fixing means of the positioning part. It is possible to choose to use two first auxiliary parts fixed to the reference structure with respective connection elements between the positioning part and said two first auxiliary parts, which improves the fixing stability of the positioning part, although the rotation is subject to the use of a new auxiliary part or the use of tilting means, such as tilting ball joints, in the receiving means of the arm, shaft, handle or the like of the tool.

With this modular configuration between the positioning part of the clamping and/or centring tool and the first auxiliary part, the adjustment in three, four or up to five degrees of freedom of the position of said clamping and/or centring tool with respect to the reference structure is allowed, according to the use of one or two connection elements in the fixing means of the positioning parts, as well as the use of tilting means, all without having to modify or adapt said reference structure in a specific way, simply using modular elements that allow scaling the system as desired and that are in turn recoverable.

According to another preferred embodiment of the modular tool positioning system, the adjustment of the position of the fixed tool is increased by one degree of freedom by interposing a second auxiliary part between the first auxiliary part and the positioning part whereto said tool is fixed. To this end, the fixing means of the positioning part is configured to be indirectly coupled to the reference structure through its fixing to a second auxiliary part, positioned between the first auxiliary part and this positioning part, by direct fixing to this second auxiliary part or by fixing to this same second auxiliary part by means of connection elements that are arranged between the fixing means of the positioning part and receiving means of the second auxiliary part, these receiving means of the second auxiliary part being configured for the gripping of these connection elements by means of adjustable closing means; wherein this second auxiliary part is in turn fixed to the connection elements that are associated with the first auxiliary part by means of other fixing means, and wherein the modular positioning system is configured to adjust the distance between the first and second auxiliary part and/or the tilting and/or rotation of the fixing position of the clamping part on the second auxiliary part.

This configuration of the modular positioning system increases the possibilities of adjusting the position and orientation of the clamping and/or centring tool without having to modify the reference structure and by means of modular elements that allow the system to be scaled as desired and which are in turn recoverable.

**In** accordance with a possible embodiment additional to the above, the modular positioning system includes, in addition to the first and second auxiliary part, one or more new auxiliary parts between the tool and the reference structure, connected to each other by connection elements fixed and adjusted in their position through adjustable means of said fixing, which is configured to allow the adjustment of the distance between the auxiliary parts that are contiguous and/or the tilting and/or rotation of the fixing position between them. This allows the modular positioning system to be scaled to any of the necessary positions of the project to be designed for a tool assembly and, extensively, to a working structure that includes multiple assemblies with tools attached.

Common to the above embodiments, and according to a preferred embodiment, both the positioning part, as well as at least the first and second auxiliary part are formed by at least one clamping part with one or more housings as receiving and fixing means of connection elements and/or arm, shaft, handle or the like configured to close thereon in an adjusted manner by the adjustable closing means, wherein the housings that form the receiving and fixing means are arranged on one or more faces of the clamping part.

According to a possible embodiment of the invention, the second auxiliary part and/or the positioning part comprise two housings as fixing means on the same face of the clamping part by way of fixing of two connection elements, comprising on a perpendicular face at least one housing by way of receiving means of other connection elements or of an arm, shaft, handle or the like of the tool.

This configuration allows, starting from a simple part such as a clamp, which is preferably of a rectangular section geometry with perpendicular contiguous faces, making a connection between parts and an adjustment of the arrangement of the connection elements or handles of the tool, having different possible coupling faces of the tool and/or of the connection elements, whereby configurations can be had between connection elements and handle of the tool that are longitudinal or perpendicular arrangements, depending on which face said connection elements are coupled in an auxiliary part.

The holes of the fixing means configured to be attached to the reference structure, as well as the openings of the fixing means that is configured to receive two connection elements, are complementary and coincident with the distance between the receiving holes of the reference structure, as well as with its width dimension of the tubular profile that shapes it taking into account the distance of the positioning of the connection elements that are fixed to the first auxiliary part. In other words, the parts of the modular positioning system are standardised, so that both the direct fixing of these parts to the reference structure, and the connection between different auxiliary parts and the positioning part, are made with interchangeable parts, even when a second auxiliary part, a new auxiliary part, or a positioning part is fixed to two connection elements at the same time, coming from two first auxiliary parts fixed from one side to the other of the reference structure, being configured so that the distance between the openings of the fixing means of said second auxiliary part, new auxiliary part, or positioning part, is standardised to have the same distance as the width of the reference structure, plus the distance in which the first auxiliary part fixes the connection elements, with respect to the reference structure whereon said first auxiliary part is fixed.

Preferably for all the above embodiments, although not in a limiting manner, the shaft, handle or the like of the tool and the connection elements between auxiliary parts or between auxiliary parts and positioning part, are formed by at least one cylindrical element, such as for example a tubular profile or cylindrical bar of circular section or the like, in coordination with an identical geometry of the opening of the receiving or fixing means. This allows an adjustment in the rotational position about the axis of the connection element or of the handle of the tool, in an easy way and without having to extract said connection element or handle from the part that secures it or carry out a greater opening of the tightening means of said connection element or handle. Fixing diameters can be varied depending on the forces anticipated to be received. The rotational adjustment of the connection elements or of the arms, shafts, handles or the like of the tool, thanks to this section configuration of cylindrical geometry allows a fine adjustment in its rotational position with respect to the chosen fixing point in the receiving and/or fixing means thereof.

Alternatively to this, while the shaft, handle or the like of the tool is formed by a cylindrical tube, on the other hand, the connection elements are formed by a joining plate or body of the contiguous auxiliary part, wherein this joining plate or body is configured to be displaced, at least in one direction, on one of the auxiliary parts that it joins. This alternative way of connection and relative displacement between two auxiliary parts allows a longitudinal adjustment displacement in the direction of the plane of the joining plate or body, allowing a more precise adjustment, as it does not have the possibility of involuntarily varying the rotation when making the longitudinal adjustment of the separation distance between parts.

In accordance with the above embodiments, and optionally, at least one of the means for receiving the positioning part or auxiliary parts has a ball joint tilting means or the like that allows said tilting with respect to the receiving axis without ball joint.

Also according to the above embodiments, and also optionally, the fixing means of the positioning part has different anchoring points on the reference structure or on the first or second auxiliary part to create a rotated position according to the chosen fixing position thereon. This allows a direct fixing on the reference structure or on a contiguous auxiliary part, which is fixed without being able to be adjusted simply by the tightening means, since the fixing is direct to the contiguous element without using adjustable connection elements. Its adjustment will be made by a dismantling and reassembly on the same contiguous element in a different rotated position, on the different fixing elements, bolt receiving holes or the like.

According to a second aspect, and taking into account the above objectives, the invention is also based on a clamping tool assembly, comprising a tool of the clamping and/or centring tool type. Advantageously, the assembly comprises a modular positioning system as disclosed in any of the above-described first aspect of embodiments of the invention, said modular positioning system configured to fix, position and orientate the clamping and/or centring tool at the desired location with respect to the reference structure.

Preferably, the clamping tool is formed by a fastening clamp, usually pneumatic, so that the final position and orientation of the clamping tool, i.e. the fastening clamp, is configured so that it exerts its clamping force in a direction perpendicular to the contact plane of the surface of the part to be clamped at the clamping point; and wherein the arm, shaft, handle or the like of this fastening clamp is directly connected to the body of the fastening clamp, being configured free of direct stresses between the press and the reaction support, which are configured to perform the clamping action on the part to be clamped and wherein both are directly integrated into the body of the fastening clamp.

Alternatively, the clamping and/or centring tool is formed by a centring device, so that the final position and orientation of the centring device and its insertion axis is configured to form the desired insertion angle of the part.

According to a third aspect, and taking into account the above objectives, the invention is also based on a working structure with clamping and/or centring tool assembly, comprising a reference structure configured for the fixing and positioning of multiple clamping and/or centring tools configured for the clamping of workpieces in one position. This working structure advantageously has that the reference structure has receiving means configured for the fixing of multiple modular positioning systems and clamping tool assemblies, such as those disclosed in the second aspect of the present invention described above, configured for the positioning and orientation of each of the multiple clamping and/or centring tools.

This configuration allows, for example, work benches that do not need parts specifically made as tool support feet, but can be self-assembled from recoverable and interchangeable parts, reducing costs and facilitating their final configuration, allowing their recovery for subsequent modifications or different elaborations.

Preferably, the reference structure is a universal modular structure comprising a tubular profile with at least a plurality of holes for receiving the positioning parts and/or the first auxiliary parts of each of the included modular positioning systems. Both the receiving holes of the reference structure, as well as its width dimension of the tubular profile that forms it, are complementary and coincident with the distance between fixing means of the positioning parts and/or of the first auxiliary parts, as well as complementary with the distance between the openings of the fixing means of the positioning parts and/or of the second auxiliary parts, when these receive two connection elements fixed one on each side of the reference structure. In other words, when a second auxiliary part, a new auxiliary part, or a positioning part is fixed to two connection elements at the same time, coming from two first auxiliary parts fixed from one side to the other of the reference structure, the distance between the openings of the fixing means of said second auxiliary part, new auxiliary part, or positioning part, is standardised to have the same distance as the width of the reference structure, plus the distance whereby the first auxiliary part fixes the connection elements, with respect to the reference structure on which said first auxiliary part is fixed.

This incorporation of a universal modular structure allows the formation of the working structure completely from standard parts, wherein a correspondence and regularity are maintained between coupling holes between the various parts that form the assembly, allowing different tubular profiles to be coupled between them to form the support structure using joining parts with a distribution of fixing elements geometrically compatible with the coupling holes of the tubular profiles and in turn compatible with the fixing means of the positioning parts and/or first auxiliary parts of the modular positioning systems that incorporate clamping and/or centring tools.

With this configuration, the following is achieved:
- a modular and flexible system that makes it possible to configure the positioning of a tool, without the need for the specific creation of elements that, outside the specific application, have no way of being reused;
- a modular system that allows self-assembly without the need for intervention of designs especially configured for the application, allowing the user to obtain the necessary degrees of freedom to facilitate a design of the tool from these standardised, scalable and recoverable parts, from obtaining two degrees of freedom in its simplest configuration to having six degrees of freedom in higher-demand configurations.
- a clamping tool assembly that allows the application of clamping forces perpendicular to parts to be clamped, as well as allowing the elimination of direct stresses between the press and the reaction support configured to perform the clamping action on the part to be clamped, increasing the life of the assembly.

### Brief description of the drawings

For a better understanding of the description made herein, a set of drawings has been provided wherein, schematically and solely by way of a non-limiting example, a practical case of embodiment is represented.
Figure 1 is a perspective view of a modular positioning system formed by a single positioning part fixed to the reference structure and with a clamping tool coupled to said positioning part, with the degrees of freedom achieved indicated schematically.
Figure 2 is a perspective view of a modular positioning system formed by a positioning part having a clamping tool fixed and wherein the fixing to the reference structure is performed by a connection element coupled to a first auxiliary part, with the degrees of freedom achieved indicated schematically.
Figure 3 is a perspective view of a modular positioning system formed by a positioning part having a clamping tool fixed and wherein the fixing to the reference structure is performed indirectly, said positioning part being fixed to a second auxiliary part by a connection element, which in turn is fixed to a first auxiliary part also by another connection element, with the degrees of freedom achieved indicated schematically.
Figure 4 is a perspective view of three possible types of configuration of the plate that form the positioning part or the auxiliary parts.
Figure 5 is a perspective view of two clamping tool assemblies installed in a reference structure.
Figure 6 is a perspective view of a clamping tool assembly installed in a reference structure, wherein the connection elements are plates that move in a single direction without rotation in the same connection element.
Figure 7 is a comparative perspective view between a state-of-the-art clamping tool assembly with foot made specifically for the position of the fastening clamp and with auxiliary elements for the application of the clamping force on the part to be clamped; and a tool assembly of the present invention.
Figure 8 is a perspective view of a working structure with multiple clamping and centring tool assemblies installed in a reference structure as a working bed.

### Description of a preferred embodiment

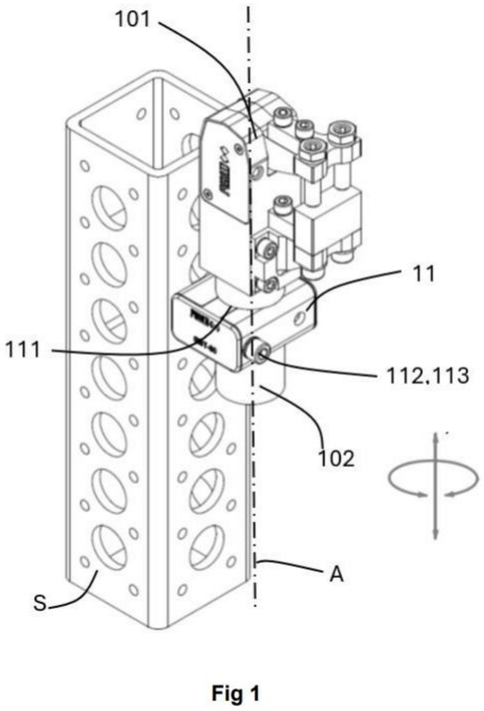

The modular tool positioning system, as well as the clamping tool assembly that incorporates said modular systems and the working structure with said systems and tool assemblies are described below with reference to figures 1 to 8.

According to a preferred embodiment of the invention and as can be seen in Figure 1, the modular positioning system (10) is based on a single positioning part (11) that is fixed to a reference structure (S) and that clamps a clamping tool (101), of the pneumatic fastening clamp type, by its arm (102), forming a clamping assembly.

The positioning part (11) comprises receiving means (111) by way of a circular section opening configured to accommodate the end of the arm (102) of the fastening clamp, which is also of cylindrical section with a diameter that allows it to be housed in said receiving means (111).

In order to be able to perform the clamping of the arm (102), the positioning part also comprises adjustable closing means (112) which in this case combines the open part of the housing opening of the receiving means (111) with means for clamping said area of the housing opening of the receiving means (111).

Finally, the positioning part (11) comprises fixing means (113) to be fixed to the reference structure (S). In this case, conventional screws are used for this fixing, taking the opportunity to join the fixing to the reference structure (S) in a single element with the same means (113) as performed by the tightening adjustment of the adjustable closing means (112). In this embodiment, the fixing means (113) are standardised and coincident with the threaded through holes of fixing of the tubular profile that forms the reference structure (S).

This simpler embodiment allows the height adjustment of the tool (101) as well as the adjustment of the rotation of the same on its insertion axis (A), these having two degrees of freedom.

Both this embodiment and the following ones, the receiving means (111) can have an inner ball joint associated with the position of the arm (102) to be able to tilt the tool (101) with respect to the axis (A) of its original insertion if there were no such ball joint.

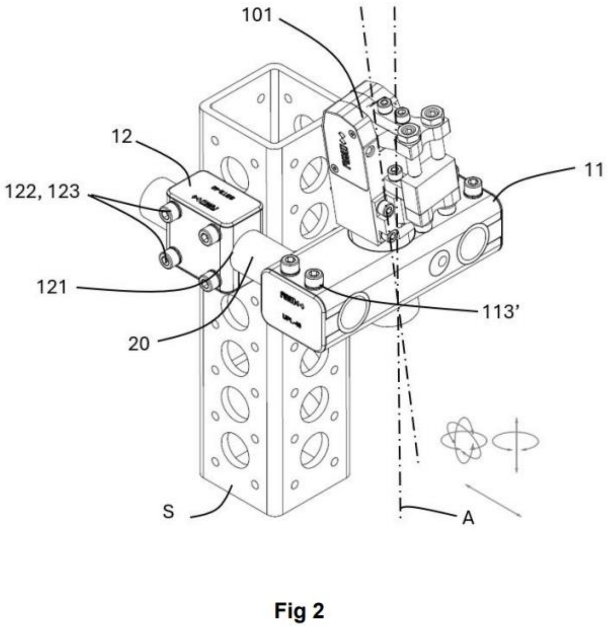

As can be seen in Figure 2, the modular positioning system (10) is configured in an indirect coupling of the positioning part (11) on the reference structure. The fixing on the reference structure (S) is performed by two first auxiliary parts (12) that are fixed directly from one side to the other of this reference structure (S) by fixing means (123). The positioning part (11) is coupled to the first auxiliary part (12) by means of two connection elements (20) each formed by a cylindrical tube that allow to be housed in the receiving means (121) of each of the two first auxiliary parts (12) and in the fixing means (113') of the positioning part. The fixing means (113') of this second embodiment of the positioning part (11) comprises respective housings for each of the connection elements (20), whereon tightening elements are applied to fix the position of the positioning part (11). Alternatively, this configuration could be carried out with a single first auxiliary part (12) and with a single connection element (20) with the positioning part, in turn allowing the adjustment in the fixing angle of said connection element (20).

In this embodiment, taking into account that there is an inner ball joint of the housing of the receiving means (111) of the positioning part (11), 5 degrees of freedom are achieved for the proper positioning of the tool (101): adjustment in height, in the rotation on the insertion axis, in depth, in its lateral tilting and in its frontal tilting.

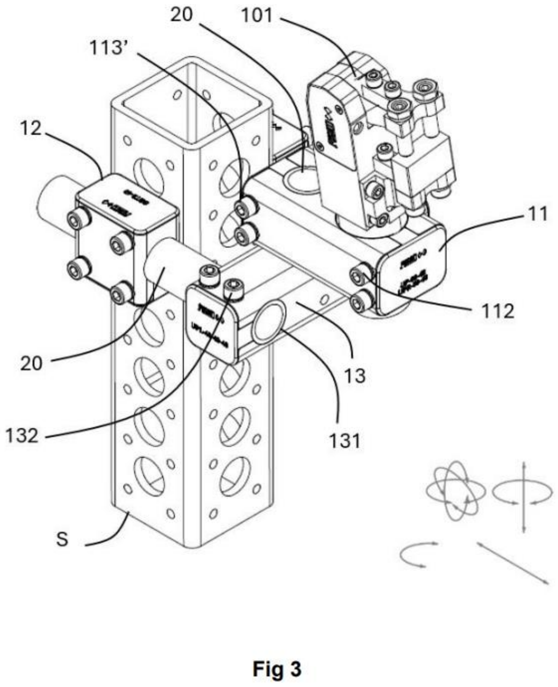

In a third embodiment, as can be seen in Figure 3, for configurations of modular positioning systems that need to create a tool assembly with greater complexity in its positioning, there is a second auxiliary part (13) located between the positioning part (11), which fixes the clamping tool (101), and the first auxiliary part (12), which is fixed to the reference structure (S). Between the first auxiliary part (12) and the second auxiliary part (13), as well as between the second auxiliary part (13) and the positioning part (11), independent connection elements (20) are provided for each connection, said connection elements (20) being formed by respective cylindrical tubes that allow to be housed in the receiving means (121, 131) of the auxiliary parts (12, 13) and in the fixing means (113') of the positioning part in a manner similar to the embodiment shown in Figure 2. This configuration achieves up to six degrees of freedom in its adjustment, thanks to the addition of the tilting means, ball joint, in the fixing means (113') of the positioning part.

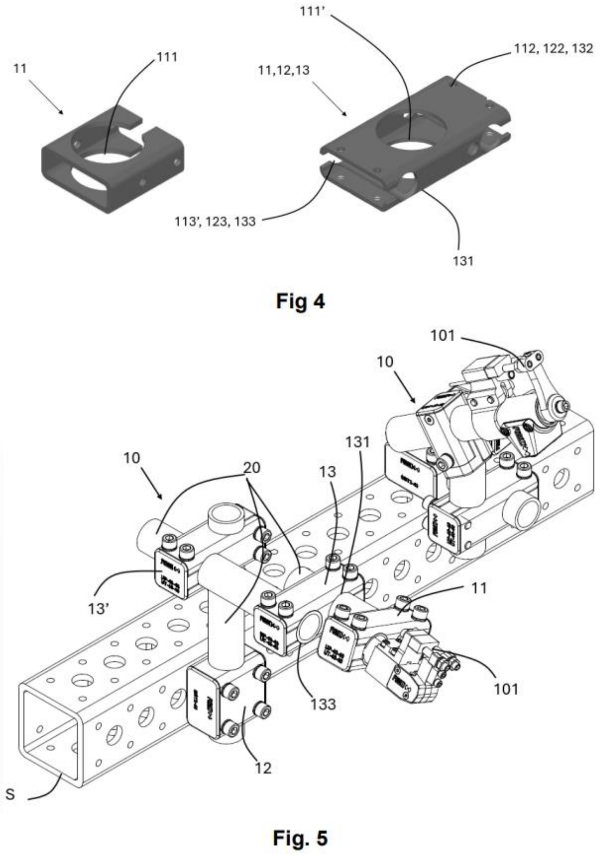

For more complex embodiments, such as those that can be seen from the clamping assemblies shown in Figure 5, the configuration of the modular positioning system (10) includes new auxiliary parts (13'), in addition to the first and second auxiliary parts (12,13) between the positioning part (11) and the reference structure (S). The connection between all these parts is made by connection elements (20) formed by cylindrical tubes and that their fixing point is fixed and adjusted in receiving means of said new auxiliary parts (13'), in a manner similar to the embodiments shown in figures 2 and 3.

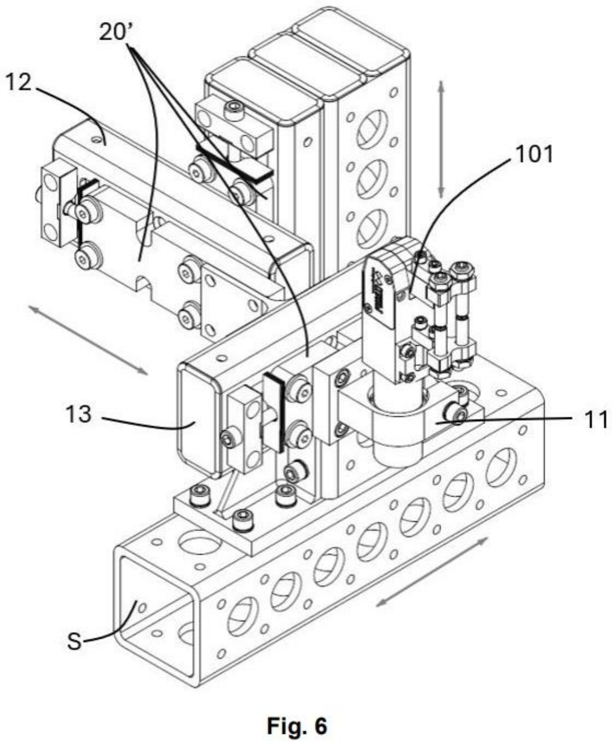

Alternatively, as can be seen in figure 6, the connection elements (20') are configured as a joining plate or body on the contiguous auxiliary part (12,13). In this configuration, this joining plate or body moves in one direction, on said auxiliary part (12,13) whereon it is joined, being able to move in other directions in the same plane of coupling of the plate on the contiguous auxiliary part (12,13).

The formation of the assemblies shown in figures 1 to 6 enable having a modular positioning system (10) flexible in its configuration and scalable, which allows performing the configuration of the positioning of a tool (101), without the need for the specific creation of elements that, outside the specific application, have no way to be reused.

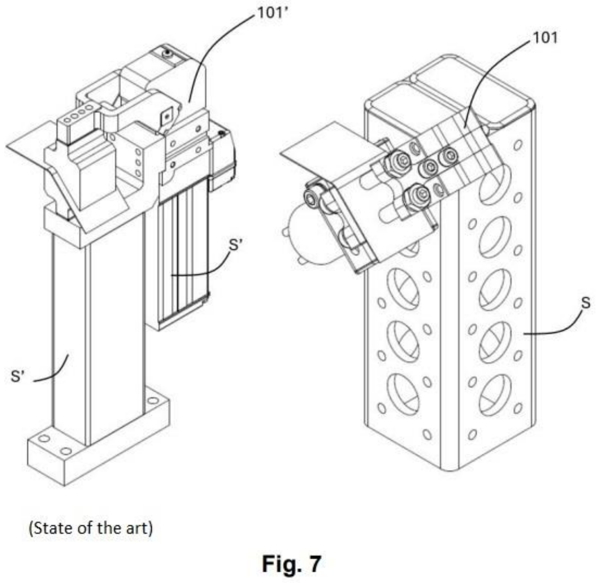

This can be seen in figure 7, wherein the execution of the state of the art is compared with the configuration of the invention. The tool (101') known in the state of the art, is attached to a foot (S') as a reference structure, designed and produced specifically for the position that the tool must take. In the case shown in said figure 7, wherein the clamping point of the fastening clamp coincides with a part in a plane different from the perpendicular of the tightening, in the state of the art auxiliary parts must be added so that forces that may bend or modify the shape of the workpiece are avoided.

The tool (101) assemblies where this tool is a fastening clamp, this fastening clamp incorporates both the press and the reaction support having that its handle (102) and the positioning part (11) are not in the stress circuit that is closed on the fastening clamp.

The auxiliary parts (12, 13, 13') and the positioning part (11) are configured in different geometries, but all of them maintain their main characteristics:
- housing means of at least one handle (102) or a connection element (20), corresponding to the receiving means (11) of the positioning part (11) or to the receiving means (121, 131) of the auxiliary parts.
- adjusting means of the fixing of the handles (102) and the connection elements (20);
- fixing means to the structure, other auxiliary parts or connection elements.

As can be seen in Figure 4, the auxiliary parts (12, 13, 13') and the positioning part (11) can be configured in a metal part of prismatic geometry and rectangular section with opposite faces, by way of a clamp with the above characteristics, having the possibility of having more section openings and adjustable tightening by way of receiving and adjusting means of connection elements (20) or receiving means of handles and distributed on the same face or on different faces of the clamping part, allowing longitudinal configurations of the modular positioning system, as well as configurations with perpendicular connections with respect to the previous one.

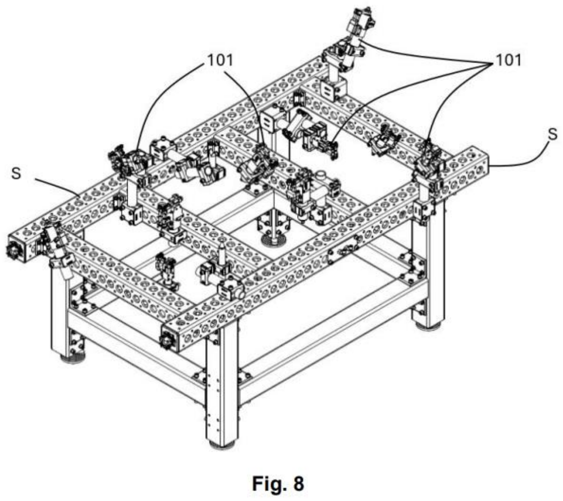

Finally, as shown in Figure 8, the modular positioning system (10) that forms the tool assembly, when performing the joint and adjusted positioning with said tool, allows the complete design of a working structure that is formed by a reference structure (S) of a certain geometry and that comprises identical tubular profiles, with receiving means (201) of other contiguous tubular profiles and that are compatible with the fixing means (113, 123) of the positioning part (11) or first auxiliary part (12), so that self-assembly can be carried out thanks to having standardised couplings and shapes, of said structure that can be considered a universal modular structure.

The flexibility and possible scaling of the configuration of the modular positioning systems (10) that form the tool assemblies and the ease of adjusting the final position of said tools, allow having a final working structure that manages to lower costs, reduce delivery times and be able to modify, remove and recover the tool assemblies completely for subsequent developments of projects of different configurations.

Although reference has been made to specific embodiments of the invention, it is evident to a person skilled in the art that the modular positioning system, as well as the clamping tool assembly and working structure incorporating same, described above are susceptible to numerous variations and modifications, and that all the details mentioned may be substituted by other technically equivalent ones, without departing from the scope of protection defined by the appended claims.

## Claims

1. Modular tool positioning system, which comprises one or more positioning parts, wherein these positioning parts are configured at least to fix, position and/or orientate a tool in space, **characterised in that** the one or more positioning parts (11) form a modular system (10) configured for the positioning of a tool (101), wherein at least one positioning part (11) comprises:
- receiving means (111) of an arm, shaft, handle or the like (102) of the tool (101);
- an adjustable closing means (112) of these receiving means (111) configured to fix in one position, as well as to release the fixing in one position and allow the movement of the arm, shaft, handle or the like (102) of the tool (101) to again perform the fixing in a final desired position; and
- fixing means (113, 113') configured to fix the positioning part (11) to a reference structure (S) directly or indirectly;
wherein the receiving means (111) of the positioning part (11) is configured such that it allow the variation of the position and orientation of the tool (101) once fixed to the reference structure (S), by at least a longitudinal displacement of the arm, shaft, handle or the like (102) of the tool (101), along a receiving axis (A); as well as by a rotational displacement of the arm, shaft, handle of the tool (101), on the receiving axis (A).

2. Modular tool positioning system, according to claim 1, wherein the fixing means (113') of the positioning part (11) is configured to couple this positioning part (11) indirectly to the reference structure (S) through one or more connection elements (20) fixed to a first auxiliary part (12); wherein this first auxiliary part (12) comprises at least one receiving means (121) of said connection elements (20), adjustable closing means (122) of the receiving means (121) for gripping and adjusting the connection elements (20) and fixing means (123) of the first auxiliary part (12) to the reference structure (S); and wherein the fixing means (113') of the positioning part (11) and/or the receiving means (121) of the first auxiliary part (12) is configured, on the one hand, to fix the position of the connection element (20) between the positioning part (11) and the first auxiliary part (12), as well as being configured to adjust, at least, the distance between the two (11,12), forming the modular positioning system (10).

3. Modular tool positioning system, according to claim 2, wherein the fixing means (113') of the positioning part (11) is configured to be indirectly coupled to the reference structure (S) through its fixing to a second auxiliary part (13), positioned between the first auxiliary part (12) and the positioning part (11), by direct fixing to this second auxiliary part (13) in a certain position or by fixing to this same second auxiliary part (13) by means of connection elements (20) that are arranged between the fixing means (113') of the positioning part (11) and receiving means (131) of the second auxiliary part (13), these receiving means (131) of the second auxiliary part (13) being configured for gripping these connection elements (20) by means of adjustable closing means (132); wherein this second auxiliary part (13) is in turn fixed to the connection elements (20) that are associated to the first auxiliary part (12) by means of other fixing means (133), and wherein the modular positioning system (10) is configured to adjust the distance between the first and second auxiliary part (12,13) and/or the tilting and/or rotation of the fixing position of the positioning part (11) on the second auxiliary part (13).

4. Modular tool positioning system, according to claim 3, wherein the modular positioning system includes, in addition to the first (12) and second auxiliary part (13), one or more new intermediate auxiliary parts (13') between the tool (101) and the reference structure (S), connected to each other by connection elements (20) fixed and adjusted in their position through adjustable means of said fixing, which is configured to allow the adjustment of the distance between the auxiliary parts that remain contiguous and/or the tilting and/or rotation of the fixing position between them.

5. Modular tool positioning system, according to any of the preceding claims, wherein both the positioning part (11), as well as at least the first and second auxiliary part (12,13) are formed by at least one clamping part with one or more housings as receiving means (111, 121, 131) and fixing means (113,133) of connection elements (20) and/or arm, shaft, handle or the like (102) configured to close over these (20,102) in an adjusted manner by the adjustable closing means (112), wherein the housings forming the receiving means (11,121,131) and fixing means (113,133) are arranged on one or more faces of the clamping part.

6. Modular tool positioning system, according to claim 5, wherein the second auxiliary part (13) and/or the positioning part (11) comprise two housings as fixing means (113, 133) on the same face of the clamping part by way of a fixing of two connection elements (20), comprising on a perpendicular face at least one housing as receiving means (111,131) of other connection elements or of an arm, shaft, handle or the like of the tool.

7. Modular tool positioning system, according to any of the preceding claims, wherein the shaft, handle or the like (102) of the tool (101) is formed by at least one cylindrical element in the form of a tubular profile, cylindrical bar or the like, in coordination with an identical geometry of the housing of the receiving means (111) of the positioning part (11).

8. Modular tool positioning system, according to any of claims 2 to 7, wherein the connection elements (20) between auxiliary parts (12,13) or between auxiliary parts (12,13) and positioning part (11), are formed by at least one cylindrical element in the form of a tubular profile, cylindrical bar or the like, in coordination with an identical geometry of the housings of the receiving or fixing means.

9. Modular tool positioning system, according to any of the claims from 2 to 7, wherein the connection elements (20') are formed by a joining plate or body of the contiguous auxiliary part (12,13), wherein this joining plate or body is configured to be displaced, at least in one direction, on one of the auxiliary parts (12,13) that it joins.

10. Modular tool positioning system, according to any of the preceding claims, wherein at least one of the receiving means (111, 121, 131) of the positioning part (11) or auxiliary parts (12, 13) have a ball joint tilting means or the like that allows said tilting with respect to the receiving axis (A) without ball joint.

11. Modular tool positioning system, according to any of the preceding claims, wherein the fixing means (113) of the positioning part (11) have different anchoring points on the reference structure (S) or on the first or second auxiliary part (12,13) to create a rotated position according to the chosen fixing position.

12. Clamping tool assembly, comprising a tool (101) of the clamping and/or centring tool type, **characterised in that** that the assembly comprises a modular positioning system (10) as described in any of claims 1 to 11, said modular positioning system (10) configured to fix, position and orientate the clamping and/or centring tool (101) in the desired location with respect to the reference structure (S).

13. Clamping tool assembly, according to claim 12, wherein the clamping tool (101) is formed by a fastening clamp such that the final position and orientation of the clamping tool (101) is configured such that it exerts its clamping force in a direction perpendicular to the contact plane of the surface of the part to be clamped at the clamping point; and wherein the arm, shaft, handle or the like (102) of the fastening clamp is directly connected to the body of the fastening clamp, being configured free of direct stresses between the press and the reaction support configured to perform the clamping action on the part to be clamped and wherein both are directly integrated into the body of the fastening clamp.

14. Working structure with clamping tool assembly, comprising a reference structure (S) configured for the fixing and positioning of multiple clamping and/or centring tools (101) configured for clamping workpieces in a position, **characterised in that** the reference structure (S) has receiving means (201) configured for the fixing of multiple modular positioning systems (10) and clamping tool assemblies, as described in claims 1 to 13, configured for the positioning and orientation of each of the multiple clamping and/or centring tools (101).

15. Working structure with clamping tool assembly, according to claim 14, wherein the reference structure (S) is a universal modular structure comprising a tubular profile with at least multiple receiving holes of the positioning parts (11) and/or of the first auxiliary parts (12) of each of the included modular positioning systems (10), wherein the receiving holes of the reference structure (S), as well as its width dimension of the tubular profile that forms it, are complementary and coincident with the distance between fixing means (113, 123) of the positioning parts (11) and/or of the first auxiliary parts (12), as well as complementary with the distance between the housings of the fixing means (113,133) of the positioning parts (11) and/or of the second auxiliary parts (13), when these receive two connection elements (20) fixed one on each side of the reference structure (S), by means of two first auxiliary parts (12).
